# EUROPEAN PATENT APPLICATION

(11) **EP 3 457 372 A2**
(43) Date of publication of application: **20.03.2019**
(21) Application number: 18194954.6
(22) Date of filing: 17.09.2018
(51) Int. Cl.: G08B 29/14

(54) **METHOD AND APPARATUS FOR CLOUD BASED PREDICTIVE SERVICE SCHEDULING AND EVALUATION**

(30) Priority: 18.09.2017 US 201715707135
(71) Applicant: Tyco Fire & Security GmbH, 8212 Neuhausen am Rheinfall (CH)
(72) Inventor: Norton, Alexandra K, Duxbury, MA 02332 (US); Brown, Tyler H, New Haven, CT 06511 (US); Hyun, Danny Seunghwan, Irvine, CA 92618 (US)
(74) Representative: Wright, Howard Hugh Burnby

(57) **Abstract**

A service management system facilitates and validates service on building management systems. A connected services database stores service events based on services performed on devices of different building management systems along with information about technicians performing the services, buildings containing the building management systems and devices being serviced. A service data aggregator retrieves the service events from the connected services database and generates prediction information and validation information based on the service events and other information. The prediction information includes a predicted duration and cost of different types of service as well as a predicted service interval for devices requiring periodic service. The validation information includes whether services performed by a particular technician need to be reviewed or audited, or whether the particular technician needs additional training or oversight, based on comparing the duration of services performed by the particular technician to the duration of services performed by all technicians.

## Description

### BACKGROUND OF THE INVENTION

Building management systems such as building automation systems, fire alarm systems and intrusion systems are often installed within a premises such as commercial, residential, or governmental buildings. Examples of these buildings include offices, hospitals, warehouses, public infrastructure buildings including subways and bus terminals, multi-unit dwellings, schools or universities, shopping malls, government offices, and casinos.

Fire alarm systems typically include fire control panels that function as system controllers. Fire detection/initiation devices and alarm notification devices are then installed, distributed throughout the buildings and connected to the panels. Some examples of fire detection/initiation devices include smoke detectors, carbon monoxide detectors, flame detectors, temperature sensors, and/or pull stations (also known as manual call points). Some examples of fire notification devices include speakers, horns, bells, chimes, light emitting diode (LED) reader boards, and/or flashing lights (e.g., strobes).

The fire detection devices monitor the buildings for indicators of fire. Upon detection of an indicator of fire such as smoke or heat or flames, the distributed device is activated and a signal is sent from the activated distributed device to the fire control panel. The fire control panel then initiates an alarm condition by activating audio and visible alarms of the fire notification devices of the fire alarm system, which are also distributed around the building. Additionally, the fire control panel will also send an alarm signal to a monitoring station, which will notify the local fire department or fire brigade.

Intrusion systems typically include intrusion panels and their own distributed devices. The distributed monitoring devices detect indications of intrusions, building security breaches and unauthorized access at or within the building and report to the intrusion panels. Examples of monitoring devices include motion sensor devices, door and window relays, thermal sensors, and surveillance camera devices that communicate with the intrusion panel over a security network. Motion sensor devices can detect intrusions and unauthorized access to the premises, and send indications of the intrusions to the security panel. The surveillance camera devices capture video data of monitored areas within the premises, in examples.

Building automation systems will typically include one or more building automation control panels and distributed devices that control and monitor the physical plant aspects of a building and aspects of business-specific electrical, computer, and mechanical systems. The physical plant typically includes heating, ventilation, and air conditioning (HVAC) systems, elevators/escalators, lighting and power systems, refrigeration and coolant systems, and air and/or water purification systems, in examples. HVAC systems typically include air handlers and systems of ducts and vents for circulating air throughout the building. Business-specific systems include computer systems, manufacturing systems that include various types of computer-aided machinery and test equipment, and inventory control and tracking systems, in examples.

Building management systems require service, including installation, repair, testing, inspection, and compliance testing. When the systems are initially installed, the panels are typically located in a secure part of the building. Then, the distributed devices are installed throughout the building. The panels and the distributed devices must then be interconnected. Wired systems are often used. Although, in some cases wireless links are used to provide interconnection. Then later in the lifecycle, repair may be required. Sensor-type distributed devices can be damaged. They can also become dirty. Inspection and compliance testing is also mandatory for many types of building management systems. Fire alarm systems must be tested typically on a yearly basis, for example.

Recently, it has been proposed to use connected services systems to monitor fire alarm systems. Connected services systems are remote systems that communicate with the building management systems and are sometimes administered by separate business entities than the owners and/or occupants of the buildings, which contain the building managements systems. For example, the connected services system can be administered by a building management system manufacturer and/or an entity providing service on the building management systems.

Often during service, the connected services systems communicate with the control panel of a fire alarm system and mobile computing devices operated by on-site technicians. This has allowed the control panels to report status information, including devices events from distributed devices connected to the panels, to the connected services systems. Similarly, this has allowed the mobile computing devices, via mobile applications, to display information about the fire alarm systems, receive local service data, including inspection results, service narrative information and/or service completion status for different distributed devices, and send the local service data to the connected services system. By facilitating communication between the control panels and mobile computing devices, and by collecting and storing device events and local service data, connected services systems have been used to facilitate service on fire alarm systems.

For example, typically, the fire alarm devices are periodically tested by technicians (e.g., monthly, quarterly, or annually depending on fire or building codes) to verify that the distributed devices are physically sound, unaltered, working properly, not obstructed, properly labeled, and located in their assigned locations.

This testing of the distributed devices is often accomplished with a walkthrough test. During an inspection, the connected services system receives device events from the control panel, which originated from the distributed devices and local service data from a mobile computing device, including inspection results. Illustrated by way of example, upon activation of a fire alarm device, the control panel receives a signal from the activated device. Event data are generated and sent to the connected services system. The event data are stored and/or logged by the connected services system and also sent to the mobile computing device in real-time. The on-site technician is able to view the event data and verify that the fire alarm device is physically sound, unaltered, working properly, and in its assigned location. The mobile computing device then sends local service data including inspection results to the connected services system, and the technician moves to test the next fire alarm device.

### SUMMARY OF THE INVENTION

Service calls for building management systems can be very costly. On the other hand, problems with the systems that are allowed to manifest into system failures can disrupt a service customer's business until repairs can be completed. Entities providing service attempt to service these systems on a regular basis, but they generally do not have access to any real-time data indicating when service is actually necessary. Moreover, there is little tracking of service visits or records of their duration or cost or data to provide certification that the service was actually performed.

According to the present invention, detailed installation and service data for a building management system is sent to a connected services system. That data is collected with specificity regarding the type and location of device being serviced, such as installed, configured, tested or repaired, among other examples. After a sufficient amount of data is collected, an accurate model will have been generated, via a predictive analysis process, for predicting how long certain services take to perform.

The service data can be aggregated by a service data aggregator to intelligently schedule service visits as well as evaluate and provide feedback on technicians providing the service. The service data aggregator can provide accurate estimates to service customers of how long a particular job might take to complete and model the actual costs of such service visits to the entities providing service, allowing them to be more competitive in service contract bids.

The service data aggregator can also evaluate technicians. For example, if the technicians are completing certain tasks too quickly or slowly, additional training or oversight can be recommended. Additionally, if the tasks are being completed too quickly, the service data aggregator can flag the tasks for review to determine whether the service was actually completed and/or if the work needs to be repeated. This service data becomes part of an official record that service customers can use to validate services have actually been performed (for example, in response to an audit).

In general, according to one aspect, the invention features a service management system for facilitating service of building management systems of a building. The service management system includes a service workflow module, a connected services database and a service data aggregator. The service workflow module receives device events from the building management systems and local service data from a mobile computing device operated by a technician and generates service events. The connected services database stores the service events. The service data aggregator generates aggregated service data based on the service events as well as prediction and/or validation information based on the aggregated service data.

In embodiments, the building management systems might be fire alarm systems, intrusion systems, and/or building automation systems. The aggregated service data is further based on device information, building information, and/or technician information stored in the connected services database. The service events further might include device information, status information, service type information, date information, time information, and/or technician information.

In one example, the prediction information includes a predicted duration of a particular type of service based on the time and date information of the service events previously generated from the same type of service.

In another example, the prediction information includes a predicted service interval of a particular type of service based on time and date information of service events previously generated from the same type of service, and the predicted service interval is further based on building type information. Service alerts are generated based on the predicted service interval.

In yet another example, the validation information is based on whether average durations of particular types of services performed by a particular technician match average durations of the same types of services performed by all other technicians, and the validation information includes whether further review of the service is indicated and/or additional training or oversight of the particular technician is indicated.

In general, according to another aspect, the invention features a method for facilitating service of building management systems of a building. Device events from the building management systems and local service data from a mobile computing device operated by a technician are received, and service events based on the device events and local service data are generated and stored. Aggregated service data based on the service events are then stored, and prediction and/or validation information is generated based on the aggregated service data.

In general, according to another aspect, the invention features a method for facilitating service of building management systems of one or more buildings. Information about previously performed service on building management systems, devices of the building management systems, technicians performing service, and the buildings is accumulated, and optimized service schedules for the building management systems are generated based on the accumulated information.

The above and other features of the invention including various novel details of construction and combinations of parts, and other advantages, will now be more particularly described with reference to the accompanying drawings and pointed out in the claims. It will be understood that the particular method and device embodying the invention are shown by way of illustration and not as a limitation of the invention. The principles and features of this invention may be employed in various and numerous embodiments without departing from the scope of the invention.

### BRIEF DESCRIPTION OF THE DRAWINGS

In the accompanying drawings, reference characters refer to the same parts throughout the different views. The drawings are not necessarily to scale; emphasis has instead been placed upon illustrating the principles of the invention. Of the drawings:
Fig. 1 is a schematic diagram of a service management system according to an embodiment of the current invention;
Fig. 2 is a diagram of exemplary tables of the connected services database;
Fig. 3 is a sequence diagram illustrating the process by which the connected services database accumulates service data, such as during service, on the building management system, and the service data aggregator generates prediction and/or validation information based on the service data;
Fig. 4 is a flow diagram illustrating an example of how the service data aggregator generates predicted durations and costs for service;
Fig. 5 is a flow diagram illustrating another example of how the service data aggregator generates predicted service intervals for devices requiring periodic service; and
Fig. 6 is a flow diagram illustrating an example of how the service data aggregator generates validation information for services performed by particular technicians.

### DETAILED DESCRIPTION OF THE PREFERRED EMBODIMENTS

The invention now will be described more fully hereinafter with reference to the accompanying drawings, in which illustrative embodiments of the invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art.

As used herein, the term "and/or" includes any and all combinations of one or more of the associated listed items. Further, the singular forms and the articles "a", "an" and "the" are intended to include the plural forms as well, unless expressly stated otherwise. It will be further understood that the terms: includes, comprises, including and/or comprising, when used in this specification, specify the presence of stated features, integers, steps, operations, elements, and/or components, but do not preclude the presence or addition of one or more other features, integers, steps, operations, elements, components, and/or groups thereof. Further, it will be understood that when an element, including component or subsystem, is referred to and/or shown as being connected or coupled to another element, it can be directly connected or coupled to the other element or intervening elements may be present.

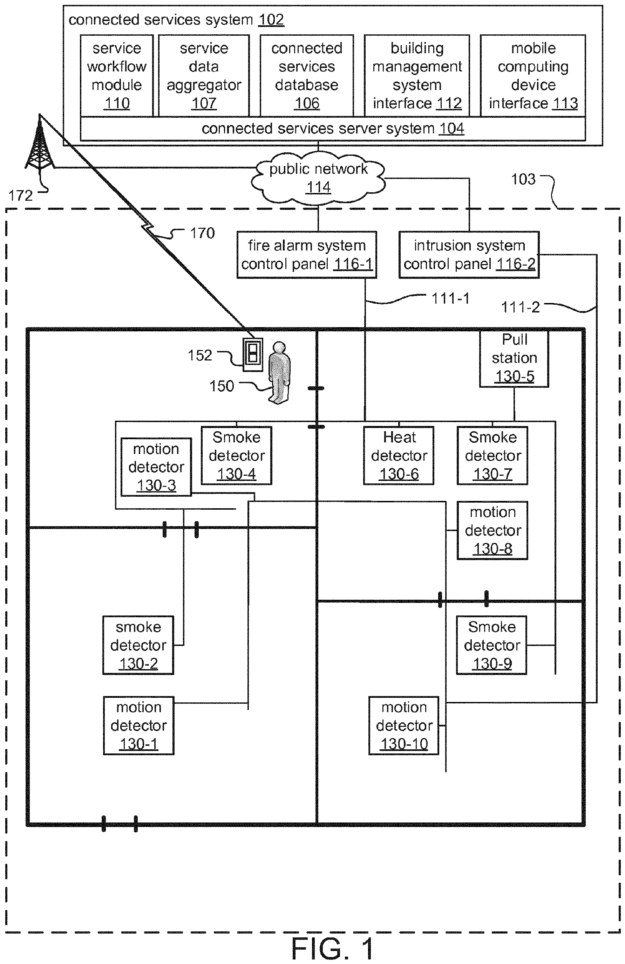

Fig. 1 is a schematic diagram of a service management system according to an embodiment of the current invention.

The service management system includes a connected services system 102, which, at a high level, communicates with building management systems installed within buildings 103 of various client entities, typically. Examples of client entities include residential, commercial, or governmental companies or agencies. Examples of the buildings include offices, hospitals, warehouses, retail establishments, shopping malls, schools, multi-unit dwellings, government buildings, or casinos, to list a few examples.

In general, the building management systems include control panels 116 and distributed devices 130. The control panels 116 direct the function of the respective building management system by determining and displaying the operational status of or sensor data from the distributed devices 130.

The distributed devices 130 are connected to their respective control panels 116 via safety and security wired and/or wireless networks 111 of the building 103. These networks 111 support data and/or analog communication between the distributed devices 130 and the respective control panels 116. In some embodiments (not illustrated), the distributed devices 130 could all be connected to the same safety and security network 111.

In the illustrated example, distributed devices 130 of the fire alarm system are connected to a fire alarm system control panel 116-1 via safety and security network 111-1 and are slave devices of the panel.

The distributed fire alarm devices 130 include alarm initiation devices including smoke detectors 130-2, 130-4, 130-7, 130-9, heat detectors 130-6 and manually activated devices such as pull stations 130-5. Alarm initiation devices can also include devices that are not depicted in the illustrated example, including call points and carbon monoxide detectors. The alarm initiation devices monitor the buildings for indicators of fire. Upon detection of indicators of fire, device signals are sent from the alarm initiating devices to the control panel. The device signals are typically alarm signals and/or analog values. The alarm signals are used to signal the control panel 116-1 that a fire has been detected. Alternatively, some devices provide analog values to indicate measured conditions. In one example, temperature sensors provide analog values for measured temperatures. In another example, smoke sensors provide analog values indicating smoke obscuration levels. The control panel 116-1 then determines if the analog values are indicative of a fire. Additionally, in some examples, the alarm initiation devices provide both alarm signals and analog values.

The distributed fire alarm devices 130 could further include fire notification devices (not illustrated), which notify occupants of the building 103 of a potential fire and generally include speakers, horns, bell, chimes, light emitting diode (LED) reader boards, and/or flashing lights (e.g., strobes), to list a few examples. In response to detection of indicators of fire, the fire alarm system control panel 116-1 initiates an alarm state, which activates the fire notification devices.

Similar to the fire alarm system, distributed devices 130 of the intrusion system are connected to an intrusion system control panel 116-2 via a second network 111-2.

The distributed intrusion devices 130 include devices for detecting the presence of unauthorized individuals in the building 103, including motion detectors 130-1, 130-3, 130-8, 130-10 and other devices (not illustrated) such as security cameras, door and window relays and network video recorders, among other examples. Upon detection of the presence of unauthorized individuals, device signals are sent from the motion detectors 130-1, 130-3, 130-8, 130-10 to the intrusion control panel 116-2.

The present system can be extended to other types of building management systems. For example in another implementation the panel is a building automation panel such as a panel that might control building climate including HVAC.

In the illustrated example, a technician 150 holding a mobile computing device 152 is also shown. The technician 150 is an individual performing service on the building management systems, including employees of entities occupying the building 103, property managers, building management system manufacturers and/or providers of service for building management systems.

In the illustrated example, the mobile computing device 152 is a smartphone device. Alternatively, the mobile computing device 152 could be a laptop computer, tablet computer, phablet computer (i.e., a mobile device that is typically larger than a smart phone, but smaller than a tablet), smart watch, or specialized service and/or testing device to list a few examples. The mobile computing device 152, which is operated by the technician 150, presents information about the building management systems, receives local service data from the technician, including inspection results, service narrative information and/or service completion status for different devices, and sends the local service data to the connected services system 102.

Each of the fire alarm system control panel 116-1, intrusion system control panel 116-2, and mobile computing device 152, are connected to the connected services system 102 via a leased data connection, private network and/or public network 114, such as the internet. In some cases, the control panels 116 have been given network connectivity to communicate with the connected services system 102; in other cases, testing computers connected to the control panels 116 function as gateways. The mobile computing device 152 connects to the public network 114 via a wireless communication link 170 to a cellular radio tower 172 of a mobile broadband or cellular network or public and/or private wired data networks such as an enterprise network, Wi-Max, or Wi-Fi network, for example.

The connected services system 102 is typically implemented as a cloud system. It can be run on a proprietary cloud system or implemented on one of the popular cloud systems operated by vendors such as Alphabet Inc., Amazon, Inc. (AWS), or Microsoft Corporation.

As a result, the connected services system 102 typically operates on a connected services server system 104. In some cases, this server system 104 is one or more dedicated servers. In other examples, they are virtual servers.

The connected services server system 104 executes modules, including a service workflow module 110 and a service data aggregator 107. Each of these modules is associated with separate tasks. In some cases, these modules are discrete modules or they are combined with other modules into a unified code base. They can be running on the same server or different servers, virtualized server system, or a distributed computing system.

The service workflow module 110 functions as an application server that communicates with the mobile computing device 152. The service workflow module 110 provides the steps necessary for the technician 150 to service the building management system. The service workflow module 110 further receives the local service data provided by the technician 150 indicating that a particular panel 116 or distributed device 130 of the building management system has been serviced. This local service data may further include inspection results, narrative description from the technician describing the state of a particular panel 116 or distributed device 130 a description of its particular location, and/or notes concerning that panel or distributed device that might be useful for the next service. Further, the service workflow module 110 also receives device events from the particular panel 116 or distributed device 130 undergoing service and combines the device events with the local service data and then stores the resulting service events to a connected services database 106 in connection with the particular service being carried out on the building management system.

The connected services database 106 provides customer specific installation information to the service workflow module 110. In particular, the connected services database 106 includes device information such as lists of control panels 116 installed at various customer premises, the distributed devices 130 maintained by those panels, and historical test data and status information associated with those panels and distributed devices. Additionally, the connected services database 106 stores the service events, including service type information, date and time information (of services performed) and which technician performed the service, building information, including the type of building 103, technician information, including technician status information, among other examples.

In general, the service data aggregator 107 retrieves service events and other information from the connected services database 106, generates aggregated service data based on the service events, and generates prediction and/or validation information based on the aggregated service data. The prediction information includes predicted durations and/or costs of particular types of service and/or predicted service intervals, both of which are based on time and date information of the service events previously generated from the same or similar types of service and possibly other information from the connected services database 106 such as building type information and/or when technicians 150 providing service are able/permitted to access the different buildings 103 to perform the service. The predicted service intervals include predicted failure rates of devices and/or battery replacement for devices. Based on the predicted service intervals, the service data aggregator 107 also generates service alerts. The validation information is based on whether average durations of particular types of services performed by a particular technician 150 match the average durations of the same types of services performed by other technicians 150 and includes whether further review of services performed is indicated and/or whether additional training or oversight of the particular technician 150 providing the services is indicated.

The connected services system 102 also includes a building management system interface 112 and a mobile computing device interface 115.

The building management system interface 112 operates as the interface between the service workflow module 110 and the particular control panel 116 undergoing service. In particular, the building management system interface 112 converts instructions from the service workflow module 110 into instructions that are formatted into the protocol implemented by the particular panel. Additionally, the building management system interface 112 receives information such as device events from the current control panel 116 or distributed device 130 under service and converts those device events into a uniform format that can be consumed by the service workflow module 110, regardless of the underlying protocol implemented by the panels and distributed devices.

The mobile computing device interface 115 operates as an interface between the service workflow module 110 and mobile computing devices 152 used by technicians 150 performing the service.

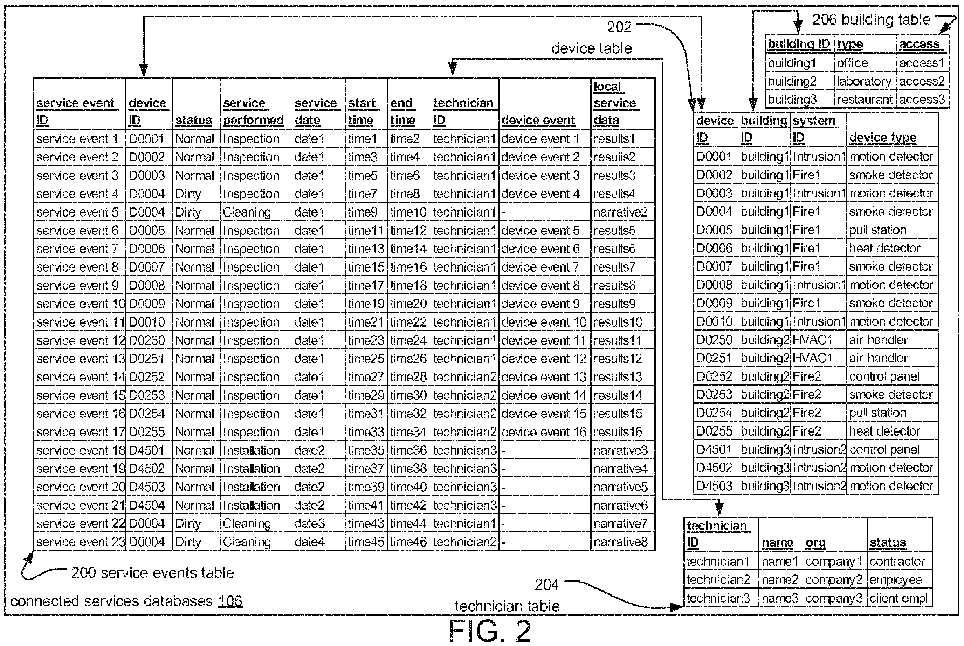

Fig. 2 is a diagram of exemplary tables of the connected services database 106, including a service events table 200, a device table 202, a technician table 204, and a building table 206.

The service events table 200 stores service records compiled during service from different sources including the serviced distributed devices 130 and/or control panels 116 and the mobile computing device 152 of the technician 150 performing the service. The service events table 200 includes columns for service event ID, device ID, status, service performed, service date, start time, end time, technician ID, device event, and local service data. The service event ID is a unique identifier assigned to each service event record. The device ID is a unique identifier assigned to each distributed device 130 and control panel 116, and the device IDs in the service events table 200 refers to the same device IDs in the device table 202. The status column includes information about the service or operational status of the devices being service such as "Normal" or "Dirty" among other examples ("Dirty" indicating that cleaning of the device is indicated). The service performed column includes information about the type of services performed such as "Inspection", "Installation", and "Cleaning", among other examples. The service date column includes the date of when the service was performed, and the start time and end time columns include the time of day at which the services were started and ended, respectively. The technician ID is a unique identifier assigned to each technician 150, and the technician IDs in the service events table 200 refer to the same technician IDs in the technician table 204. The device event column includes device events sent from the distributed devices 130 and/or control panels 116 during service, including status information, alarm signals and/or sensor data. The local service data column includes local service data entered by the technician 150 into the mobile computing device 152 during service, as previously discussed.

The device table 202 includes information about distributed devices 130 and control panels 116. The device table 202 includes a device ID column, a building ID column, a system ID column and a device type column. The building ID is a unique identifier assigned to each building 103, and the building IDs in the device table 202 refer to the same building IDs in the building table 206. The system ID is a unique identifier assigned to each building management system. The device type column includes information about the type of each distributed device 130 and control panel 116 listed in the devices table 202.

The technician table 204 includes biographical and status information about the technicians 150 providing service. The technician table 204 includes a technician ID column, a name column, an organization column, which stores the entity employing the technician 150, and a status column, which stores the employer relationship status of the technician 150, such as whether the technician 150 is a private contractor, an employee of the entity providing service, or an employee of the service customer, among other examples.

The building table 206 includes information about the buildings 103 containing the building management systems on which services are performed. The building table 206 includes a building ID columna type column, which includes information about the type of building 103, such as "office", "laboratory", or "restaurant", among other examples, and an access column, which includes information about when technicians 103 are permitted and/or able to access the building 103 to provide service.

In general, the information in the connected services database 106 is used by the service data aggregator 107. Multiple records from one or more tables can be filtered by certain criteria, averaged, and/or compared, among other examples, in order to generate prediction and/or validation information.

In the illustrated example, the service event "service event 5" indicates that the device "D0004", which is a smoke detector in the fire alarm system "Firel", located in the building 103 "buildingl", was cleaned by the technician 150 "technician1", who is a contractor working for "company1". The cleaning was performed starting at "time9" and ending at "time 10", the difference of which could indicate the duration of the cleaning. In this example, the service data aggregator 107 could compare the duration of the cleaning to the duration of all other cleanings to validate whether the service was actually performed. At a higher level, the service data aggregator 107 could compare the duration of all cleanings by "technician1" to the duration of all cleanings by all other technicians 150 to determine whether "technician1" requires further training and/or oversight. At an even higher level, the service data aggregator 107 could compare the average duration of all cleanings by technicians 150 who are contractors to the average duration of all cleanings by technicians 150 who are employees of the entity providing service to evaluate the effectiveness and/or efficiency of contractors providing service.

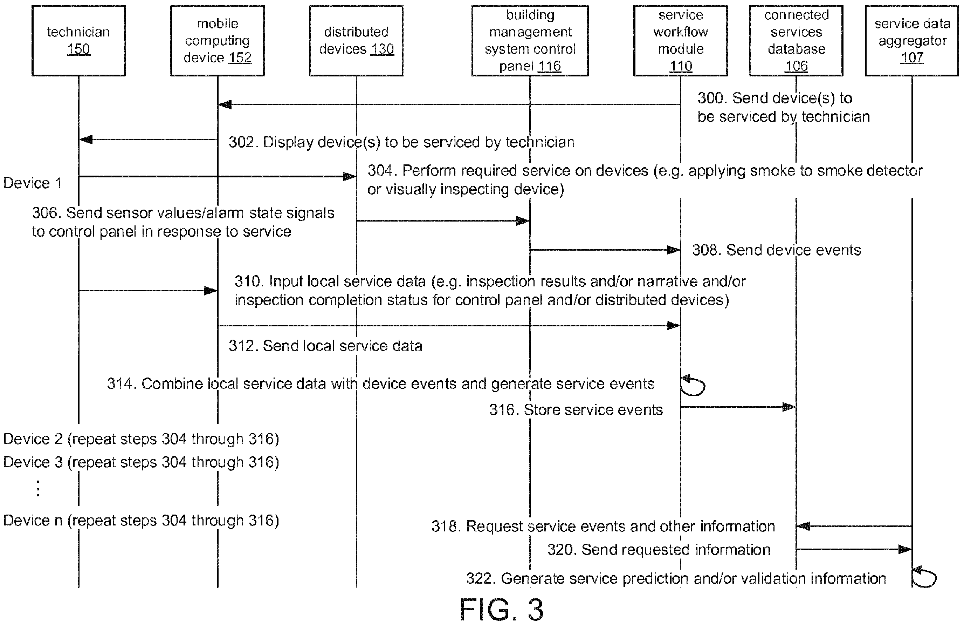

Fig. 3 is a sequence diagram illustrating the process by which the connected services database 106 accumulates service data, such as during service, on the building management system, and the service data aggregator 107 generates prediction and/or validation information based on the service data.

In step 300, the service workflow module 110 sends the distributed devices 130 and/or control panels 116 to be serviced to the mobile computing device 152, which displays them to the technician 150 in step 302.

In step 304, the technician 150 performs the service for the first device, for example, by applying smoke to a smoke detector in order to test it.

In response, in step 306, the distributed device 130 sends sensor values/alarm state signals to the control panel 116, which generates device events (which can include the sensor values or alarm state signals and time information, for example) and sends the device events to the service workflow module 110 in step 308. For service on control panels 116 (not illustrated), the control panel 116 would send the device events to the service workflow module 110 in response to the technician 150 performing the service on the control panel 116, without first receiving the sensor values/alarm state signals from the distributed devices 130.

In step 310, the technician 150 also inputs local service data to the mobile computing device 152. The local service data is sent from the mobile computing device 152 to the service workflow module 110 in step 312.

In step 314, the service workflow module 110 combines the local service data with the device events, resulting in service events, which are stored in the connected services database 106 in step 316.

The process of steps 304 through 316 repeats for several devices, possibly for several technicians 150, over several service visits, performing service on several building management systems. In this way, the service data is accumulated by the connected services database 106.

In step 318, the service data aggregator 107 requests the service events and other information from the connected services database 106, which sends the requested information to the service data aggregator 107 in step 320. The particular information requested can include all of the data stored by the connected services database 106 or can be limited by particular criteria, for example, determined by the specific prediction and/or validation information being generated by the service data aggregator 107.

Finally, in step 322, the service data aggregator 107 generates the prediction and/or validation information.

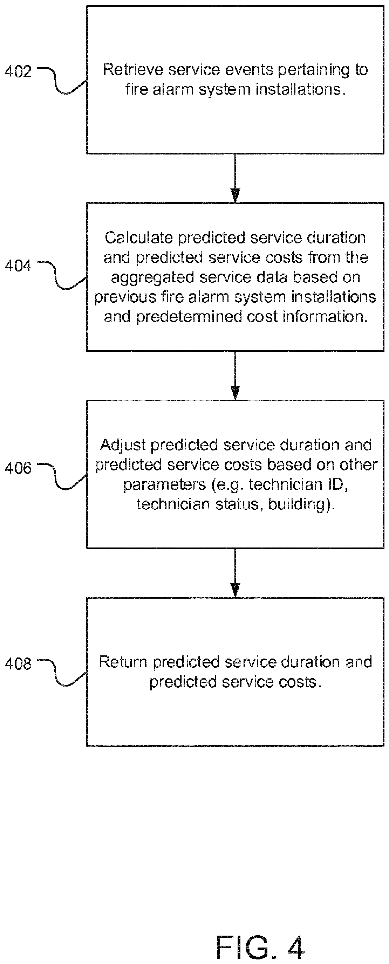

Fig. 4 is a flow diagram illustrating an example of how the service data aggregator 107 generates predicted durations and costs for service. In step 402, the service data aggregator 107 retrieves service events pertaining to a particular type of service (e.g. fire alarm system installations). Then, in step 404, the service data aggregator 107 calculates a predicted duration and cost for the particular type of service based on service events as well as predetermined cost information. In step 406, the predicted duration and predicted cost are adjusted based on other information to which the service data aggregator 107 has access, including further information from the connected services database 106 (for example, information for particular technicians 150, employment relationship status for the technicians 150, or building information such as the specific building 103 or type of building being serviced). The resulting predicted duration and predicted cost are returned in step 408. This information could then be used by the entity providing service to further generate an optimally competitive quote and/or provide an estimated duration to the service customer.

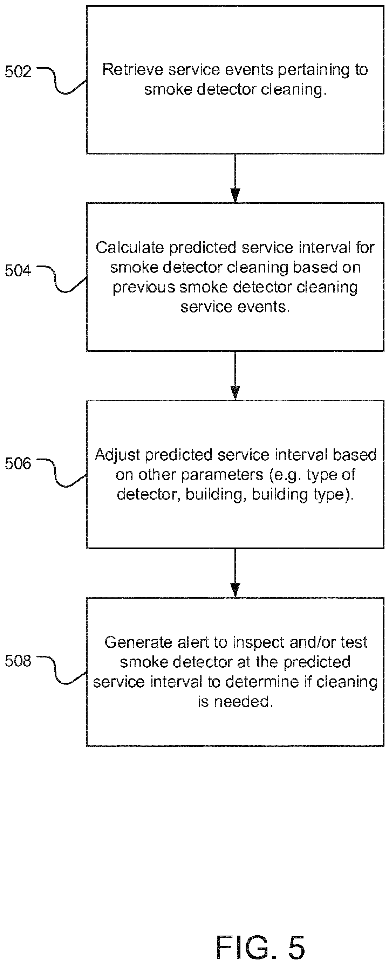

Fig. 5 is a flow diagram illustrating another example of how the service data aggregator 107 generates predicted service intervals for devices requiring periodic service. In step 502, the service data aggregator 107 retrieves service events pertaining to smoke detector cleaning. Then, in step 504, the service data aggregator 107 calculates a predicted service interval for smoke detector cleaning based on, for example, the frequency of cleanings of individual detectors as indicated by the service events. In step 506, the predicted service interval is further adjusted based on other information, as before, such as the type of detector, the building 103, or the type of building. Finally, in step 508, the service data aggregator 107 generates an alert to inspect and/or test smoke detectors at the predicted service interval to determine if cleaning is needed. This can include scheduling future service visits or displaying alerts, via the service workflow module 110, to technicians 150 currently providing service to additionally service the smoke detector(s), among other examples.

In another example, the predicted duration information can be combined with the predicted service intervals and further combined with building information from the building table 206, device information from the device table 202, technician information from the technician table 204, and other information, to generate an optimized service schedule for the entity providing service for the upcoming quarter.

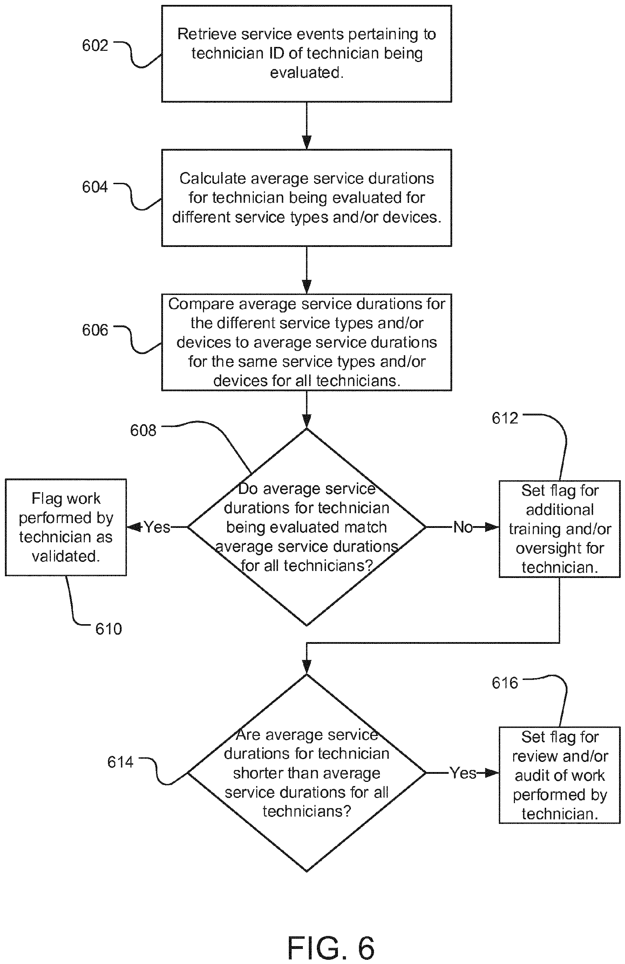

Fig. 6 is a flow diagram illustrating an example of how the service data aggregator 107 generates validation information for services performed by particular technicians 150.

In step 602, the service data aggregator 107 retrieves service events pertaining to a particular technician 150 to be evaluated (for example, by referencing the technician's 150 technician ID).

In step 604, the average service durations of different types of service and/or types of devices for the particular technician 150 are calculated based on the service events. These average durations are compared to average durations of the same types of service and/or devices for all technicians 150 in step 606.

In step 608, if the average durations match, the services performed by the particular technician 150 are flagged as validated in step 610. On the other hand, if they do not match, in step 612, the service data aggregator 107 sets a flag for additional training and/or oversight for the particular technician 150.

Additionally, in step 614, if the average durations for the particular technician 150 are shorter than those for all technicians 150, the service data aggregator 107 sets another flag for a review and/or audit of the services performed by the particular technician 150 whose durations were shorter than the average for all technicians 150.

While this invention has been particularly shown and described with references to preferred embodiments thereof, it will be understood by those skilled in the art that various changes in form and details may be made therein without departing from the scope of the invention encompassed by the appended claims.

## Claims

1. A service management system for facilitating service of building management systems of a building, comprising:
a service workflow module for receiving device events from the building management systems and local service data from a mobile computing device operated by a technician and generating service events;
a connected services database for storing the service events; and
a service data aggregator for generating aggregated service data based on the service events and generating prediction and/or validation information based on the aggregated service data.

2. The system as claimed in claim 1, wherein the building management systems include fire alarm systems, intrusion systems, and/or building automation systems.

3. The system as claimed in either of claims 1 or 2, wherein the aggregated service data is further based on device information, building information, and/or technician information stored in the connected services database.

4. The system as claimed in any of the previous claims, wherein the service events further include device information, status information, service type information, date information, time information, and/or technician information.

5. The system as claimed in any of the previous claims, wherein the prediction information includes a predicted duration of a particular type of service based on time and date information of service events previously generated from the same type of service.

6. The system as claimed in any of the previous claims, wherein the prediction information includes a predicted service interval of a particular type of service based on time and date information of service events previously generated from the same type of service.

7. The system as claimed in any of the previous claims, wherein the validation information is based on whether average durations of particular types of services performed by a particular technician match average durations of the same types of services performed by all other technicians.

8. The system as claimed in any of the previous claims, wherein the validation information includes whether further review of the service is indicated and/or additional training or oversight of the particular technician is indicated.

9. A method for facilitating service of building management systems of a building, comprising:
receiving device events from the building management systems and local service data from a mobile computing device operated by a technician;
generating and storing service events based on the device events and local service data;
generating aggregated service data based on the service events; and
generating prediction and/or validation information based on the aggregated service data.

10. The method as claimed in claim 9, further comprising generating the aggregated service data based on device information, building information, and/or technician information stored.

11. The method as claimed in either of claims 9 or 10, further comprising generating prediction information based on a predicted duration of a particular type of service based on time and date information of service events previously generated from the same type of service.

12. The method as claimed in any of claims 9-11, further comprising generating prediction information based on a predicted service interval of a particular type of service based on time and date information of service events previously generated from the same type of service.

13. The method as claimed in any of claims 9-12, further comprising generating the validation information based on whether average durations of particular types of services performed by a particular technician match average durations of the same types of services performed by all other technicians.

14. The method as claimed in any of claims 9-13, wherein the validation information includes whether further review of the service is indicated and/or additional training or oversight of the particular technician is indicated.

15. A method for facilitating service of building management systems of one or more buildings, comprising accumulating information about previously performed service on building management systems, information about devices of the building management systems, information about the technicians performing service, and information about the buildings, and generating optimized service schedules for the building management systems based on the accumulated information.
